# EUROPEAN PATENT SPECIFICATION

(11) **EP 2 373 518 B1**
(45) Date of publication and mention of the grant of the patent: **04.09.2019**
(21) Application number: 10701889.7
(22) Date of filing: 05.01.2010
(51) Int. Cl.: B60N 2/01, B60N 2/015, B60N 2/24, B60N 2/68, B60P 3/42, B60P 7/08

(54) **A LOCKING DEVICE FOR LOCKING AN OBJECT ON A SUPPORT STRUCTURE**
VERRIEGELUNGSVORRICHTUNG ZUM VERRIEGELN EINES BAUTEILS AN EINER TRAGSTRUKTUR
DISPOSITIF DE VERROUILLAGE POUR VERROUILLER UN ÉLÉMENT SUR UNE STRUCTURE DE SUPPORT

(30) Priority: 05.01.2009 GB 0900106
(43) Date of publication of application: 12.10.2011
(73) Proprietor: Seating Design & Development Limited, Brentwood Essex CM14 4SX (GB)
(72) Inventor: MARSHALL, Neal, West Midlands B91 1JX (GB); HALLETT, Brian, Richard, Essex CM14 4PL (GB)
(74) Representative: Jones, Graham Henry
(86) International application number: PCT/GB2010/000005
(87) International publication number: WO 2010/076572

(56) References cited:
- EP-A2- 0 922 605
- DE-A1- 3 206 319
- DE-A1- 19 915 136

## Description

This invention relates to a locking device and, more especially, this invention relates to a locking device for locking an object on a support structure. The locking device may be especially useful for locking cargo on a support structure in the form of a flat platform on a vehicle.

Locking devices are known for locking an object on a support structure. The locking devices are such that the object is rigidly fixed to the support structure. There may be times when the support structure flexes, for example on occasions when the support structure is a wheeled vehicle travelling over rough terrain. This flexing of the support structure may cause forces to be transferred through the locking device and onto the object, with the result that the object may become damaged either instantly or over a period of time due to repeated flexing of the support structure.

EP 0 992 605 A2 discloses a furniture anchorage, particularly for seats which is designed to cooperate with a floor track. A bar or tube overlies the floor track and has inverted mushroom studs. The heads of the mushroom studs enter the floor track through apertures in the track. The heads of the mushroom studs engage under the lips of slots in the floor track. Locking means are also disclosed.

Another locking device is known from DE 32 06 319 A1 and discloses a first locking means with a spindle 1 which terminates in a spigot 6 and a second locking means with a handle 3 which is attached on a pivot at the other end of the spindle 1.

It is an aim of the present invention to obviate or reduce the above mentioned problem.

Accordingly, the present invention provides a locking device for locking an object on a support structure, which locking device comprises a fork arrangement for engaging an upper part of the object from an edge of the upper part of the object, first locking means for locking the fork arrangement to the object in a horizontal plane, second locking means for locking the fork arrangement to
the object in a vertical plane, and movement-permitting means which permits vertical movement in the locking device, the vertical movement being sufficient to allow the support structure to flex so as to prevent the flexing of the support structure acting through the locking device and damaging the object, but with the vertical movement being insufficient adversely to affect secure locking of the object on the support structure by the locking device, wherein
(i) the first and the second locking means operate about a common spindle, wherein the common spindle terminates in a spigot;
(ii) the first locking means comprises a handle which is movable in a horizontal plane for rotating the common spindle and to move the spigot in an elongated aperture; and
(iii) the second locking means comprises a hand wheel which is manually screwed down the common spindle for locking, and which is unscrewed for release.

During normal conditions, the support structure will not be caused to flex and the locking device will rigidly lock the object on the support structure. However, if conditions should occur in which the support structure is caused to flex, then the provision of the movement-permitting means permits the flexing to take place without damaging the object and also without compromising the secure locking of the object on the support container. Generally, the object may be any object on any support structure that may flex during operational conditions. For example, the object may be cargo on a support structure in the form of a platform on a back of a vehicle. The vehicle may be a road vehicle and the road vehicle may be a military road vehicle. With military road vehicles, the cargo may be a frame having seats for military personnel to be carried by the vehicle.

Usually, the movement-permitting means will be such that the vertical movement takes place in the second locking means.

The movement-permitting means may be a spring. The spring is preferably a coil spring but other types of spring may be employed.

The movement-permitting means may alternatively be a washer having a spring facility. The washer is preferably a bevel washer but other types of washer having a spring facility may be employed.

Movement-permitting means other than a spring or a washer may also be employed.

The hand wheel may have peripheral formations for providing a hand grip.

The hand wheel may be provided with apertures for lightening the weight of the hand wheel.

Embodiments of the invention will now be described solely by way of example and with reference to the accompanying drawings in which:
Figure 1 is a perspective view of a locking device for locking an object on a support structure;
Figure 2 is an alternative perspective view of part of the locking device shown in Figure 1;
Figure 3 is a sectional view through the locking device shown in Figure 1;
Figure 4 is a side view of two locking devices as shown in Figure 1 in use locking an object on a support structure; and
Figure 5 is an end view of what is shown in Figure 4.

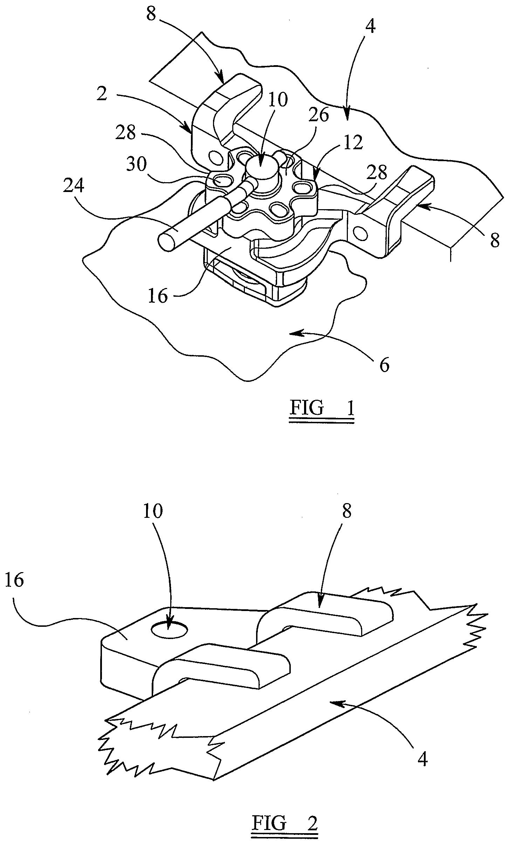

Referring to Figures 1 - 3, there is shown a locking device 2 for locking an object 4 to a support structure 6. The locking device 2 comprises a fork arrangement 8 for engaging an upper part of the object 4 from an edge of the upper part of the object 4 as shown. The locking device 2 also comprises first locking means 10 for locking the fork arrangement 8 to the object 4 in a horizontal plane. The locking device 2 further comprises second locking means 12 for locking the fork arrangement 8 to the object 4 in a vertical plane.

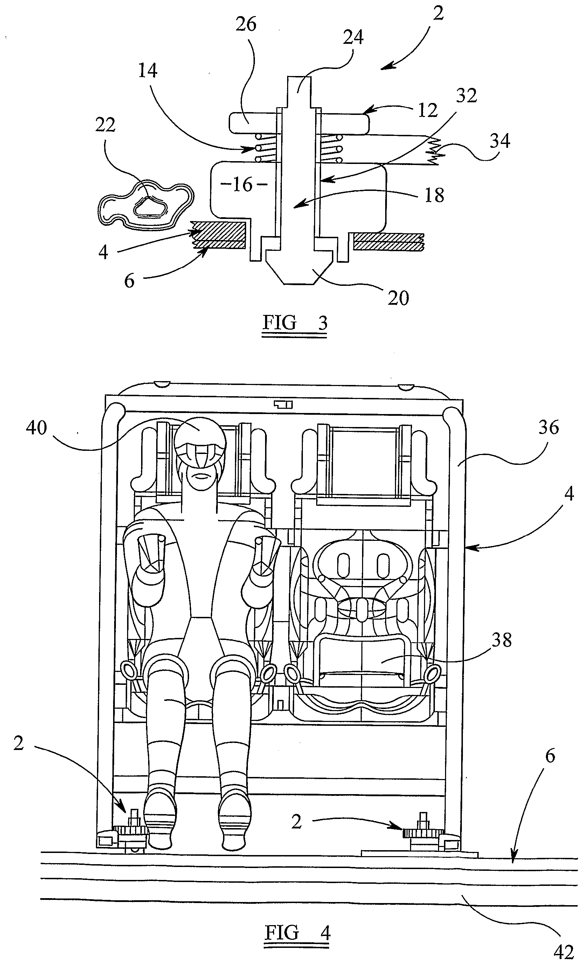

The locking device 2 further comprises movement-permitting means 14 (see Figure 3) which permits vertical movement in the locking device 2. The vertical movement is sufficient to allow the support structure 6 to flex so as to prevent the flexing of the support structure 6 acting through the locking device 2 and damaging the object 4. The vertical movement is insufficient adversely to affect secure locking of the object 4 on the support structure 6 by the locking device 2. During normal conditions, the locking device 2 will rigidly lock the object 4 to the support structure 6. Only during adverse conditions causing the support structure 6 to flex will the movement-permitting means 14 come into operation. When the movement-permitting means 14 comes into operation, it will allow the flexing of the support structure 6 to be absorbed by the locking device 2 because the vertical movement will take place in the locking device 2 and more specifically will take place in the second locking means 12. The vertical movement will be very small and it will not be sufficient adversely to affect secure locking of the object 4 on the support structure 6. Once the conditions causing the support structure 6 to flex have passed, then the movement-permitting means 14 will return to its normal position in which there will be no limited vertical movement, and the object 4 will be rigidly locked to the support structure 6, but always with the facility of the small amount of permitted vertical movement to accommodate for any flexing of the support structure 6 due to abnormal conditions.

As can be seen from Figure 3, the movement-permitting means 14 is a coil spring. The coil spring sits between the second locking means 12 and a body part 16 of the locking device 2.

The first locking means 10 and the second locking means 12 operate about a common spindle 18. The spindle 18 terminates in a spigot 20 which moves in an elongated aperture 22. The first locking means 10 comprises a handle 24 which is movable through 90° in a horizontal plane in order to move the spigot 20 in the aperture 22. When the handle 24 is appropriately positioned, the first locking means 10 operates to lock the fork arrangement 10 to the object 4 in a horizontal plane.

After the first locking means 10 has been operated, the second locking means 12 is operated. The second locking means 12 comprises a hand wheel 26 which is manually screwed down for locking, and which is unscrewed for release. When the hand wheel 26 is screwed down, the second locking means 12 is operative to lock the fork arrangement 8 to the object 4 in a vertical plane. The hand wheel 26 has the illustrated formations 28 for providing a hand grip. The formations 28 are provided with apertures 30 in order to lighten the weight of the hand wheel 26.

When the first and the second locking means 10, 12 are in their locked condition, the movement-permitting means 14 still provides a small amount of vertical movement to accommodate flexing of the support structure 6. In addition to flexing being caused by the support structure 6 travelling over uneven terrain, flexing may also occur in other situations such for example as in the event of an accident.

As shown in Figure 3, the spindle 18 and the body part 16 have mating coarse threads 32 for allowing speedy operation of the second locking means 12 upon rotation of the hand wheel 26. When the second locking means 12 is in its locked position, then the amount of vertical movement allowed by the movement-permitting means 14 is the gap 34 shown in Figure 3, namely the distance between the underside of the hand wheel 26 and the upper surface of the body part 16.

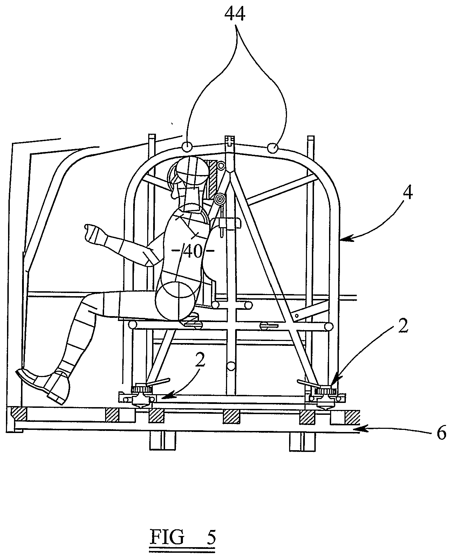

Referring now to Figures 4 and 5, there are shown two of the locking devices 2 in operation locking an object 4 to a support structure 6. The object 4 is a frame 36 having seats 38 for persons 40. The support structure 6 is a flat rear bed on the back 42 of a military road vehicle. In the event that the road vehicle should roll over on its side in an accident, then the frame 36 provides roll over protection to the persons 40 sitting in the seats 38. Two longitudinally extending bars 44 also provide the persons 40 sitting in the seats 38 protection from hazards such as tree branches or tree trunks that may topple over onto the vehicle as it is passing through wooded areas. The frame 36 may be a lightweight frame. Bottom seat portions of the seats 38 may be removed so that the remainder of the frame 36 can easily be fitted in position. Once fitted, the bottom portions of the seats 38 can be attached to the remainder of the frame 36. The first and/or the second locking means as shown in Figures 4 and 5 advantageously provide rapid release locking to aid in rapid fit and removal of the object 4 to the support structure 6.

It is to be appreciated that the embodiments of the invention described above with reference to the accompanying drawings have been given by way of example only and that modifications may be effected. Thus, for example, the fork arrangement 8 shown in the drawings has two tines. Other types of fork arrangement may be employed, for example with more than two tines. The movement-permitting means 14 may be a spring other than the illustrated coil spring. It may alternatively be a washer with a spring facility such for example as a bevel washer. The aperture 22 may be of a shape other than the illustrated star shape.

## Claims

1. A locking device (2) for locking an object (4) on a support structure (6), which locking device (2) comprises a fork arrangement (8) for engaging an upper part of the object (4) from an edge of the upper part of the object (4), first locking means (10) for locking the fork arrangement (8) to the object (4) in a horizontal plane, second locking means (12) for locking the fork arrangement (8) to the object (4) in a vertical plane, and movement-permitting means (14) which permits vertical movement in the locking device (2), the vertical movement being sufficient to allow the support structure (6) to flex so as to prevent the flexing of the support structure (6) acting through the locking device (2) and damaging the object (4), but with the vertical movement being insufficient adversely to affect secure locking of the object (4) on the support structure (6) by the locking device (2), **characterised in that**:
(i) the first and the second locking means (10, 12) operate about a common spindle (18), wherein the common spindle (18) terminates in a spigot (20);
(ii) the first locking means (10) comprises a handle (24) which is movable in a horizontal plane for rotating the common spindle (18) and to move the spigot (20) in an elongated aperture; and
(iii) the second locking means (12) comprises a hand wheel (26) which is manually screwed down the common spindle (18) for locking, and which is unscrewed for release.

2. A locking device (2) according to claim 1 in which the movement-permitting means (14) is such that the vertical movement takes place in the second locking means (12).

3. A locking device (2) according to claim 1 or claim 2 in which the movement-permitting means (14) is a spring.

4. A locking device (2) according to claim 3 in which the spring is a coil spring.

5. A locking device (2) according to claim 1 or claim 2 in which the movement-permitting means (14) is a washer having a spring facility.

6. A locking device (2) according to claim 5 in which the washer is a bevel washer.

7. A locking device (2) according to any one of the preceding claims in which the hand wheel (26) has peripheral formations (28) for providing a hand grip.

8. A locking device (2) according to any one of the preceding claims in which the hand wheel (26) is provided with apertures (30) for lightening the weight of the hand wheel (26).

## Patentansprüche

1. Sicherungsvorrichtung (2) zum Sichern eines Gegenstands (4) auf einer Tragstruktur (6), wobei die Sicherungsvorrichtung (2) eine Gabelanordnung (8) zum Eingreifen mit einem oberen Teil des Gegenstands (4) von einem Rand des oberen Teils des Gegenstands (4) aus, ein erstes Sicherungsmittel (10) zum Sichern der Gabelanordnung (8) an dem Gegenstand (4) in einer horizontalen Ebene, ein zweites Sicherungsmittel (12) zum Sichern der Gabelanordnung (8) an dem Gegenstand (4) in einer vertikalen Ebene und ein eine Bewegung erlaubendes Mittel (14) umfasst, das eine vertikale Bewegung in der Sicherungsvorrichtung (2) erlaubt, wobei die vertikale Bewegung ausreicht, um zu ermöglichen, dass sich die Tragstruktur (6) biegt, um zu verhindern, dass ein Biegen der Tragstruktur (6) durch die Sicherungsvorrichtung (2) wirkt und den Gegenstand (4) beschädigt, wobei die vertikale Bewegung jedoch nicht ausreicht, um die sichere Sicherung des Gegenstands (4) auf der Tragstruktur (6) durch die Sicherungsvorrichtung (2) zu beeinträchtigen, **dadurch gekennzeichnet, dass**:
(i) das erste und das zweite Sicherungsmittel (10, 12) um eine gemeinsame Spindel (18) laufen, wobei die gemeinsame Spindel (18) in einem Zentrierzapfen (20) endet,
(ii) das erste Sicherungsmittel (10) einen Griff (24) umfasst, der in einer horizontalen Ebene bewegbar ist, um die gemeinsame Spindel (18) zu drehen und den Zentrierzapfen (20) in einer länglichen Öffnung zu bewegen, und
(iii) das zweite Sicherungsmittel (12) ein Handrad (26) umfasst, das manuell zum Sichern auf die gemeinsame Spindel (18) aufgeschraubt und zum Lösen abgeschraubt wird.

2. Sicherungsvorrichtung (2) nach Anspruch 1, bei der das eine Bewegung erlaubende Mittel (14) derart ist, dass die vertikale Bewegung in dem zweiten Sicherungsmittel (12) erfolgt.

3. Sicherungsvorrichtung (2) nach Anspruch 1 oder Anspruch 2, bei der das eine Bewegung erlaubende Mittel (14) eine Feder ist.

4. Sicherungsvorrichtung (2) nach Anspruch 3, bei der die Feder eine Schraubenfeder ist.

5. Sicherungsvorrichtung (2) nach Anspruch 1 oder Anspruch 2, bei der das eine Bewegung erlaubende Mittel (14) eine Unterlegscheibe ist, die eine Federeinrichtung aufweist.

6. Sicherungsvorrichtung (2) nach Anspruch 5, bei der die Unterlegscheibe eine Kegelscheibe ist.

7. Sicherungsvorrichtung (2) nach einem der vorhergehenden Ansprüche, bei der das Handrad (26) periphere Ausbildungen (28) aufweist, um einen Handgriff bereitzustellen.

8. Sicherungsvorrichtung (2) nach einem der vorhergehenden Ansprüche, bei der das Handrad (26) mit Öffnungen (30) zum Verringern des Gewichts des Handrads (26) versehen ist.

## Revendications

1. Dispositif de verrouillage (2) permettant de verrouiller un objet (4) sur une structure de support (6), lequel dispositif de verrouillage (2) comporte un agencement à fourches (8) à des fins de mise en prise d'une partie supérieure de l'objet (4) depuis un bord de la partie supérieure de l'objet (4), un premier moyen de verrouillage (10) permettant de verrouiller l'agencement à fourches (8) sur l'objet (4) dans un plan horizontal, un deuxième moyen de verrouillage (12) permettant de verrouiller l'agencement à fourches (8) sur l'objet (4) dans un plan vertical, et un moyen permettant un mouvement (14) qui permet un mouvement vertical dans le dispositif de verrouillage (2), le mouvement vertical étant suffisant pour permettre le fléchissement de la structure de support (6) pour empêcher le fléchissement de la structure de support (6) d'agir sur le dispositif de verrouillage (2) et d'endommager l'objet (4), mais le mouvement vertical étant insuffisant pour avoir un effet négatif sur le verrouillage sûr de l'objet (4) sur la structure de support (6) par le dispositif de verrouillage (2), **caractérisé en ce que**:
(i) les premier et deuxième moyens de verrouillage (10, 12) fonctionnent autour d'une broche commune (18), la broche commune (18) se terminant par un ergot (20);
(ii) le premier moyen de verrouillage (10) comprend une poignée (24) qui est mobile dans un plan horizontal pour faire tourner la broche commune (18) et pour déplacer l'ergot (20) dans une ouverture allongée; et
(iii) le deuxième moyen de verrouillage (12) comprend un volant (26) qui est vissé manuellement sur la broche commune (18) pour le verrouillage, et qui est dévissé pour le déverrouillage.

2. Dispositif de verrouillage (2) selon la revendication 1, dans lequel le moyen permettant un mouvement (14) est tel que le mouvement vertical a lieu dans le deuxième moyen de verrouillage (12).

3. Dispositif de verrouillage (2) selon la revendication 1 ou la revendication 2, dans lequel le moyen permettant un mouvement (14) est un ressort.

4. Dispositif de verrouillage (2) selon la revendication 3, dans lequel le ressort est un ressort hélicoïdal.

5. Dispositif de verrouillage (2) selon la revendication 1 ou la revendication 2, dans lequel le moyen permettant un mouvement (14) est une rondelle ayant un mécanisme à ressort.

6. Dispositif de verrouillage (2) selon la revendication 5, dans lequel la rondelle est une rondelle conique.

7. Dispositif de verrouillage (2) selon l'une quelconque des revendications précédentes, dans lequel le volant (26) présente des formations périphériques (28) pour fournir une poignée.

8. Dispositif de verrouillage (2) selon l'une quelconque des revendications précédentes, dans lequel le volant (26) est pourvu d'ouvertures (30) pour alléger le poids du volant (26).
